## Europäisches Patentamt

## European Patent Office

## Office européen des brevets

(11) Veröffentlichungsnummer: **0 125 640**
**B1**

(12) **EUROPÄISCHE PATENTSCHRIFT**

(45) Veröffentlichungstag der Patentschrift:
**04.10.89**

(21) Anmeldenummer: **84105298.8**

(22) Anmeldetag: **10.05.84**

(51) Int. Cl.⁴: **B 60 C 7/24**

(54) **Vollreifen für Fahrzeugräder od. dgl.**

(30) Priorität: **13.05.83 DE 3317375**

(43) Veröffentlichungstag der Anmeldung:
**21.11.84 Patentblatt 84/47**

(45) Bekanntmachung des Hinweises auf die Patenterteilung:
**04.10.89 Patentblatt 89/40**

(84) Benannte Vertragsstaaten:
**AT BE CH DE FR GB IT LI LU NL SE**

(56) Entgegenhaltungen:
**DE-A-1 505 022**
**FR-A-1 162 880**
**GB-A-1 123 704**
**US-A-1 544 639**
**US-A-1 636 759**

(73) Patentinhaber: **Continental Aktiengesellschaft,
Königsworther Platz 1, D-3000 Hannover 1 (DE)**

(72) Erfinder: **Kühn, Heinz, Am Köppel 4, D-3544
Waldeck 5 (DE)**

LIBER, STOCKHOLM 1989

EP 0 125 640 B1

## Beschreibung

Die Erfindung betrifft einen Vollreifen für Fahrzeugräder oder dergl. nach dem Gattungsbegriff des 1. Patentanspruchs.

Bekannte Vollreifen dieser Art (FR-A-1 162 880) weisen von ihrer Innenfläche ausgehende, sich radial nach außen erstreckende Umfangsnuten auf, die durch eingelegte elastische Ringe am inneren Umfang des Reifenkörpers verschlossen sind. Diese Ringe sind lose eingelegt und dienen nur der Bildung von Hohlräumen in dem den Reifenfuß umschließenden Laufpolster, um so die Weichheit des Reifens zu erhöhen.

Die Erfindung geht von der Erkenntnis aus, daß auf mittengeteilten oder seitengeteilten Felgenkörpern zu montierende Vollreifen diese sowohl im Hinblick auf ihren Innendurchmesser als auch im Hinblick auf ihre Fußbreite genau der zugehörigen Felge angepaßt sein müssen, um einen ausreichend festen Sitz des Vollreifens erzielen zu können. Besteht ein solches Maßverhältnis nicht, so kann sich der Vollreifen lockern, insbesondere dem Felgenkörper gegenüber verdrehen. Dies führt zu einem vorzeitigen Verschleiß.

Der Erfindung liegt die Aufgabe zugrunde, den Reifenfuß der eingangs erwähnten bekannten Vollreifen so auszuführen, daß er auch dann ordnungsgemäß montiert und der Reifen dementsprechend vollwertig benutzt werden kann, wenn in bezug auf die Breite des Radkörpers größere Toleranzen oder abweichende Bauarten bestehen. Demgemäß strebt die Erfindung einen Vollreifen an, der sowohl auf mittengeteilten als auch auf seitengeteilten Rad- oder Felgenkörpern verwendet werden kann, ohne befürchten zu müssen, daß eine Lockerung des Reifenkörpers bei großen Umfangskräften eintritt.

Zur Lösung dieser Aufgabe ist erfindungsgemäß die Zone verminderter Härte festhaftend in den Reifenfuß einvulkanisiert und hat eine von der Sitzfläche des Felgenkörpers aus gemessene Höhe, die im wesentlichen der Höhe der Felgenhörner entspricht, derart, daß die Breite des Reifenfußes veränderbar ist.

Weitere, zweckmäßige Ausgestaltungen des erfindungsgemäßen Vollreifens sind in den Unteransprüchen beschrieben.

Da die Zone verminderter Härte festhaftend in den Reifenfuß einvulkanisiert ist, bildet sie zusammen mit den übrigen Teilen des Vollreifens ein zusammenhängendes Ganzes, so daß somit der erfindungsgemäße Vollreifen einstückig ausgeführt ist. Zudem durchsetzt die Zone verminderter Härte im wesentlichen nur den zähhart eingestellten Reifenfuß, um so dessen Verformbarkeit in Querrichtung zu vergrößern. Da diese Zone somit zwischen dem Laufpolster, den härteren Teilen des Reifenfußes und dem Felgenkörper eingeschlossen ist, wird die Tragfähigkeit des Vollreifens nicht nachteilig beeinflußt.

Weitere Einzelheiten der Erfindung werden anhand der Zeichnung erläutert, in der Ausführungsbeispiele der Erfindung dargestellt sind.

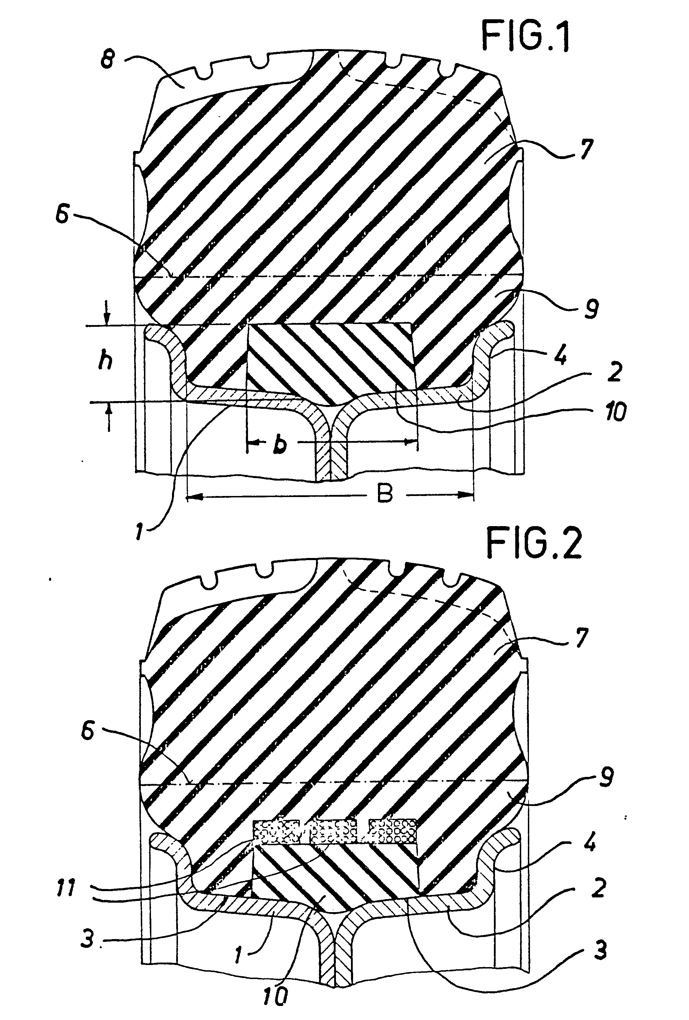

Fig. 1 bis 4 zeigen je einen radialen Teilschnitt durch ein vollgummibereiftes Fahrzeugrad.

Bei allen Ausführungsformen ist eine mittengeteilte Felge verwendet worden; die Felgenteile 1, 2 sind durch nicht näher dargestellte Mittel lösbar, gewöhnlich durch Schrauben, miteinander verbunden. Sie haben am äußeren Umfang eine geringfügig konische Sitzfläche 3 und je ein Horn 4, dessen Innenfläche 5 im montierten Zustand die lichte Breite B des Radkörpers bestimmt.

Dieser Felgen- oder Radkörper dient zur Aufnahme eines im wesentlichen aus Gummi bestehenden Vollreifens, der außerhalb der gestrichelten Linie 6 ein Laufpolster 7 mit einer Profilierung 8 aufweist. Am inneren Umfang des Vollreifens (vom Linienzug 6 am äußeren Umfang begrenzt) befindet sich der Reifenfuß 9, der durch Fremdstoffbeimischung z. B. in Form von gemahlenen Gewebeabfällen zähhart gestaltet ist. Die innere Kontur des Reifenfußes 9 ist dabei auf die Außenkontur des Radkörpers abgestimmt. Insbesondere erfaßt die Fläche 5 einen Teil der Seitenfläche des Reifenfußes 9, wenn der Vollreifen montiert bzw. die beiden Teile 1, 2 zusammengezogen sind.

Gemäß Fig. 1 hat der Reifenfuß 9 mittig eine rechteckige Zone 10 aus einem Gummi mit einer Härte von etwa 60 Shore, die gegenüber der Härte des Reifenfußes 9 wesentlich geringer ist (die Fußhärte ist größer als 70 Shore, vorzugsweise etwa 80 bis 90 Shore).

Es versteht sich, daß die Zone 10 geringerer Härte festhaftend in den Reifenfuß 9 einvulkanisiert ist. Sie hat zudem eine Breite b, die etwa 50 % der Breite B beträgt, während die Höhe h der Zone 10 im wesentlichen der Höhe der Felgenhörner 4 entspricht, jedoch kann die Höhe h auch bis an den äußeren Umfang, also bis an die Linie 6 des Reifenfußes 9 heranreichen.

Bei der Ausführungsform gemäß Fig. 2 ist die Zone 10 von drei Drahtpaketen 11 umschlossen, die mit gegenseitigem Abstand angeordnet sind, und die in der Lage sind, erhebliche Umfangskräfte aufzunehmen, um so eine Auswölbung der Zone 10 nach außen zu vermeiden bzw. den Sitz des Reifens sicherzustellen, wenn die Teile 1, 2 zusammengezogen und dabei die Zone 10 in ihrer axialen Erstreckung vermindert wird.

Eine solche Breitenverminderung des Reifenfußes 9 ist aufgrund der Zone 10 möglich und immer dann gewünscht, wenn bei Felgen- oder Radkörpern Untermaße gegeben sind oder abweichende Felgenaußenkonturen benutzt werden sollen. Der Reifenfuß 9 wird also im Regelfalle mit einem geringen Übermaß hergestellt, zumindest aber auf die größtmögliche Felge abgestimmt. Alle kleineren Felgen- oder Radkörper sind dann verwendbar, indem die vorgenannte Verformung der Zone 10 vollzogen werden kann.

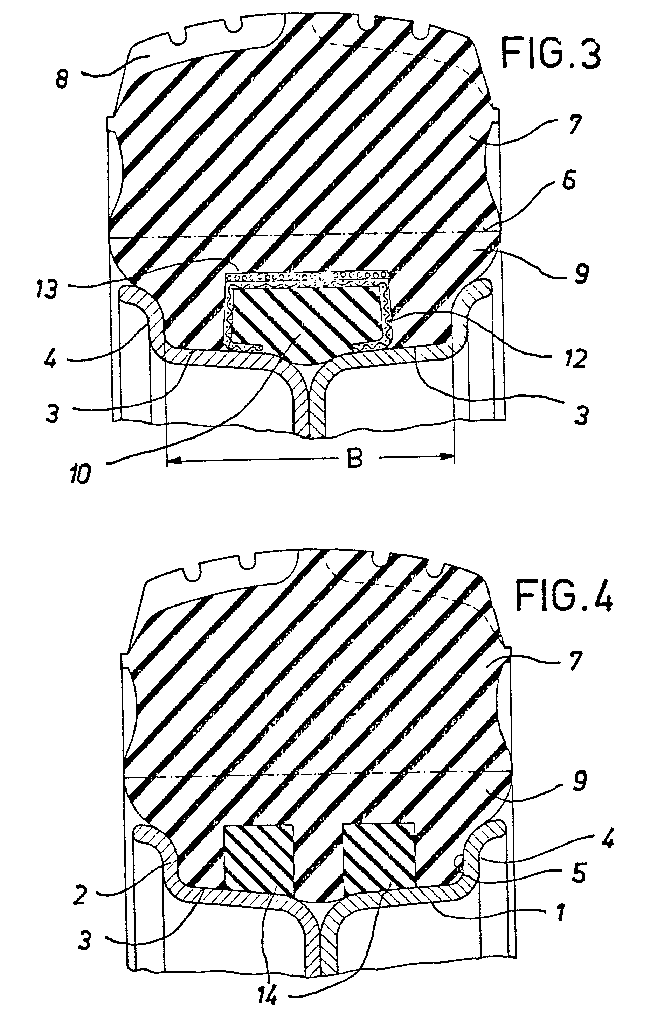

Bei der Ausführungsform gemäß Fig. 3 ist die Zone 10 von einem Vollgewebe 12 eingeschlossen, das seinerseits wiederum am äußeren Umfang der Zone 10 durch zugfeste Seile 13 gefesselt ist, die etwa in Reifenumfangsrichtung verlaufen.

Bei der Ausführungsform gemäß Fig. 4 ist die Summe der Breiten der zwei verwendeten Zonen 14 ebenfalls etwa 50 % der Fußbreite des Reifens, jedoch sind die beiden Zonen 14 etwa gleichmäßig Ober die Breite des Reifens verteilt, also mit gegenseitigem Abstand als auch mit einem Abstand von den Flächen 5 angeordnet.

Es sei noch erwähnt, daß aufgrund der Erfindung auch Toleranzen in bezug auf die Flächenkontur und insbesondere im Hinblick auf den Außendurchmesser der Felge ausgeglichen werden können; Durchmesserunterschiede sind somit unkritisch.

## Patentansprüche

1. Im wesentlichen aus Gummi oder gummiähnlichen Kunststoffen bestehender Vollreifen für Fahrzeugräder oder dergl., der auf einem ihn auch seitlich zwischen Felgenhörnern (4) erfassenden geteilten Felgenkörper (1, 2) angeordnet ist und einen zähhart eingestellten Reifenfuß (9) aufweist, dessen Härte größer als das ihn umschließende Laufpolster (7) ist und der mindestens eine Zone verminderter Härte (10, 14) aufweist, die einen Teil der inneren Umfangsfläche des Vollreifens bildet, dadurch gekennzeichnet, daß die Zone verminderter Härte (10, 14) festhaftend in den Reifenfuß (9) einvulkanisiert ist und eine von der Sitzfläche (3) des Felgenkörpers (1, 2) aus gemessene Höhe (h) hat, die im wesentlichen der Höhe der Felgenhörner (4) entspricht, derart, daß die Breite des Reifenfußes (9) veränderbar ist.

2. Reifen nach Anspruch 1, dadurch gekennzeichnet, daß bei einer Härte des Reifenfußes (9) mit einer Shorehärte größer als 70 Shore A, vorzugsweise aber etwa 80 bis 90 Shore A, die Shorehärte der Zone verminderter Härte (10) 40 bis 70, vorzugsweise aber 55 bis 65 Shore A beträgt.

3. Reifen nach Anspruch 1 und 2, dadurch gekennzeichnet, daß die Breite der Zone verminderter Härte (10) 25 bis 90 % der Reifenfußbreite, vorzugsweise aber nur etwa 50 % dieser Breite beträgt.

4. Reifen nach Anspruch 1, dadurch gekennzeichnet, daß die Zone verminderter Härte (10) zwischen Querschnittsabschnitten zähharter Ausbildung in der Weise angeordnet ist, daß die Felgenkörper (1, 2) den Reifenkörper seitlich an diesen zähhart eingestellten Querschnitten erfassen.

5. Reifen nach Anspruch 1 dadurch gekennzeichnet, daß die Höhe der Zone verminderter Härte (10) im wesentlichen der halben Höhe des Reifenfußes (9) entspricht.

6. Reifen nach Anspruch 1 dadurch gekennzeichnet, daß zwei oder mehrere Zone verminderter Härte (10) etwa gleicher Querschnittsgestalt gleichmäßig über den Reifenfuß (9) verteilt angeordnet sind (Fig. 4).

7. Reifen nach Anspruch 1 dadurch gekennzeichnet, daß die Zone verminderter Härte (10) zumindest am äußeren Umfang von zugfesten Festigkeitsträgern (11, 13) umschlossen ist.

8. Reifen nach Anspruch 7, dadurch gekennzeichnet, daß die Festigkeitsträger (11) derart mit gegenseitigem Abstand angeordnet sind, daß sie einer Axialverformung der Zone verminderter Härte (10) nicht bzw. nicht wesentlich entgegenwirken.

9. Reifen nach Anspruch 8, dadurch gekennzeichnet, daß die Festigkeitsträger (11) sich zumindest nahezu in Reifenumfangsrichtung erstrecken und im Abstand voneinander angeordnete Bündel (11) bilden.

10. Reifen nach Anspruch 7, dadurch gekennzeichnet, daß zusätzliche Festigkeitsträger (12), z. B. Gewebe, vorgesehen sind, die die Zone verminderter Härte (10) am äußeren Umfang und auch seitlich, gegebenenfalls auch an Teilen ihres inneren Umfangs bedecken.

11. Fahrzeugrad mit einem Vollreifen nach einem oder mehreren vorhergehenden Ansprüche.

## Claims

1. Solid tyre for vehicle wheels or the like, which tyre is formed substantially from rubber or rubber-like plastics materials and is disposed on a split rim body (1, 2), which also grips it laterally between rim flanges (4), the tyre having a toughened tyre base (9) with a hardness greater than the running pad (7), which is looped therearound, and having at least one zone of reduced hardness (10, 14), which forms a portion of the inner circumferential surface of the solid tyre, characterized in that the zone of reduced hardness (10, 14) is fixedly vulcanised into the tyre base (9) and has a height (h), which is measured from the seating surface (3) of the rim body (1, 2) and corresponds substantially to the height of the rim flanges (4), such that the width of the tyre base (9) is variable.

2. Tyre according to claim 1, characterised in that, when the tyre base (9) has a hardness corresponding to a Shore hardness greater than 70 Shore A, but preferably around 80 to 90 Shore A, the Shore hardness of the zone of reduced hardness (10) is 40 to 70, but preferably 55 to 65 Shore A.

3. Tyre according to claims 1 and 2, characterised in that the width of the zone of reduced hardness (10) is 25 to 90 % of the tyre base width, but preferably only around 50 % of this width.

4. Tyre according to claim 1, characterised in that the zone of reduced hardness (10) is disposed between cross-sectional portions of a toughened construction in such a manner that the rim bodies (1, 2) grip the tyre body laterally at these toughened cross-sections.

5. Tyre according to claim 1, characterised in that the height of the zone of reduced hardness (10) corresponds substantially to half the height of the tyre base (9).

6. Tyre according to claim 1, characterised in that two or more zones of reduced hardness (10) of roughly the same cross-sectional configuration are disposed in a uniform distribution over the tyre base (9) (Fig. 4).

7. Tyre according to claim 1, characterised in that the zone of reduced hardness (10) is surrounded, at least on the outer circumference, by substantially inextensible reinforcing members (11, 13).

8. Tyre according to claim 7, characterised in that the reinforcing members (11) are disposed with mutual spacings therebetween such that they do not counteract, or do not substantially counteract an axial deformation of the zone of reduced hardness (10).

9. Tyre according to claim 8, characterised in that the reinforcing members (11) extend at least substantially in the circumferential direction of the tyre and form bundles (11) which are spaced apart from one another.

10. Tyre according to claim 7, characterised in that additional reinforcing members (12), e. g. webs, are provided which cover the zone of reduced hardness (10) on the outer circumference and also laterally, possibly also on portions of its inner circumference.

11. Vehicle wheel fitted with a solid tyre according to one or more of the preceding claims.

**Revendications**

1. Bandage plein composé essentiellement de caoutchouc ou de matières synthétiques analogues au caoutchouc, pour roues de véhicules ou équivalents, qui est monté sur un corps de jante (1, 2) divisé, qui tient le bandage également latéralement entre des rebords de jante (4), et présente un pied de bandage (9) de constitution dure et tenace dont la dureté est supérieure à celle du matelas de roulement (7) qui entoure ce pied, et présente au moins une zone de dureté réduite (10, 14) qui forme une partie de la surface circonférentielle intérieure du bandage plein, caractérisé en ce que la zone de dureté réduite (10, 14) est fixée par adhérence dans le pied (9) du bandage, par vulcanisation, et possède une hauteur, mesurée à partir de la surface de repos (3) du corps (1, 2) de la jante, qui correspond sensiblement à la hauteur des rebords (4) de la jante, de manière que la largeur du pied (9) du bandage puisse varier.

2. Bandage selon la revendication 1, caractérisé en ce que, pour une dureté du pied (9) du bandage supérieure à 70 Shore A, mais de préférence à peu près comprise entre 80 et 90 Shore A, la dureté Shore de la zone de dureté réduite (10) est de 40 à 70 mais de préférence de 55 à 65 Shore A.

3. Bandage selon les revendications 1 et 2, caractérisé en ce que la largeur de la zone de dureté réduite (10) est de 25 à 90 % de la largeur du pied du bandage mais de préférence seulement d'environ 50 % de cette largeur.

4. Bandage selon la revendication 1, caractérisé en ce que la zone de dureté réduite (10) est disposée entre des segments de la section qui sont d'une constitution dure et tenace de telle manière que les corps de jante (1, 2) tiennent le corps du bandage latéralement au droit de ses segments de section transversale de constitution dure et tenace.

5. Bandage selon la revendication 1, caractérisé en ce que la hauteur de la zone de dureté réduite (10) correspond sensiblement à la moitié de la hauteur du pied (9) du bandage.

6. Bandage selon la revendication 1, caractérisé en ce que deux ou plus de deux zones de dureté réduite (10), de configuration de section à peu près identique, sont uniformément réparties sur le pied (9) du bandage (figure 4).

7. Bandage selon la revendication 1, caractérisé en ce que la zone de dureté réduite (10) est entourée, au moins au niveau de la périphérie extérieure, par des renforcements résistants à la traction (11, 13).

8. Bandage selon la revendication 7, caractérisé en ce que les renforcements résistants (11) sont disposés à un certain écartement mutuel de manière à ne pas faire obstacle, du moins pas sensiblement, à une déformation axiale de la zone de dureté réduite (10).

9. Bandage selon la revendication 8, caractérisé en ce que les renforcements résistants (11) sont orientés au moins approximativement dans la direction circonférentielle du bandage et forment des faisceaux (11) disposés à un certain écartement mutuel.

10. Bandage selon la revendication 7, caractérisé en ce qu'il est prévu des renforcements résistants additionnels (12), par exemple des tissus, qui recouvrent la zone de dureté réduite (10) sur sa périphérie extérieure, également sur ses côtés et éventuellement également le long de sa périphérie intérieure.

11. Roue de véhicule équipée d'un bandage plein selon une ou plusieurs des revendications précédentes.

# FIG.1

# FIG.2

FIG.3

FIG.4